# EUROPEAN PATENT SPECIFICATION

(11) **EP 1 473 842 B1**
(45) Date of publication and mention of the grant of the patent: **04.10.2006**
(21) Application number: 03009970.9
(22) Date of filing: 30.04.2003
(51) Int. Cl.: H04B 1/38, H01Q 1/24, H01Q 1/08, H04M 1/02

(54) **a clamshell-type mobile phone with a flat external antenna**
Klappmobiltelefon mit einer externen Flachantenne
Téléphone mobile et pliable avec une antenne plane externe

(43) Date of publication of application: 03.11.2004
(73) Proprietor: Sony Ericsson Mobile Communications AB, 221 88 Lund (SE)
(72) Inventor: Audibert, Luc, c/o Sony Ericsson Mobile Comm. Int., 85609 Aschheim-Dornach (DE)
(74) Representative: Körber, Martin Hans

(56) References cited:
- US-A- 5 752 204
- US-A- 5 809 403
- US-A- 5 907 615
- US-A- 5 995 052
- US-A- 6 137 525
- US-A1- 2002 054 677
- US-A1- 2002 158 812

## Description

The present invention relates to a shell-type mobile phone for use as a wireless handset in general, in particular to a clamshell-type mobile phone comprising a swivelling antenna whose free end can be swivelled away from the mobile phone.

Mobile phones nowadays have to fulfil several contradictory requirements, e.g. they should be small and nevertheless manageable well because it is important for many customers to have a small phone with easy to access functionabilities. The most suitable candidate in this context is a clamshell-type mobile phone (folder-type terminal). The clamshell-type mobile phone is a telephone comprising a first part and a second part, wherein the first part and the second part are connected to each other via a hinge means and whereby the first and the second part can be folded or twisted together and on top of each other so that the size of the mobile phone is significantly reduced while the mobile phone is carried around. In order to activate the speech functions or other functions of the mobile phone, the first part and the second part are twisted or flipped open.

As a further aspect of design the radiation exposure by the mobile phones which depends on the radiation power and the distance to the antenna becomes more important. For achieving mobile terminals of very compact dimensions, the antenna may be integrated into the casing of the mobile phone. Various types of built-in antenna concepts are known like e.g. spiral-type antennae, microstrip antennae or others which allow to design an antenna small enough to fit within the casing of a mobile terminal.

Technologies allowing to design a thin antenna element, e.g. microstrip, patch, printed dipoles or the like are favoured by many manufacturers of mobile terminals since a respective flat antenna device that can be integrated conveniently within the casing of a mobile. The radiating part of a respective thin antenna element is hereby usually placed just underneath the back cover of a mobile's casing opposite the keys and/or display supporting front side.

However with the built-in antenna there are limitations for the selection of the casing materials and the antenna gain is reduced by the head of the user when the mobile phone is placed against the ear during the communication. In order to reduce the reduction of antenna gain and the head exposure the mobile phone can be equipped with an external rod antenna either fixedly or extendible.

In the case of an extendible mounting, normally, the rod type antenna will be accommodated in the housing, but because of the inclination, the antenna will protrude from the back surface of the housing. This protrusion will result in increased housing thickness, and hinder good accommodation of the mobile phone when it is put in brief cases or pockets. Taking this in mind, US 20020070903A1 proposes to embed a rod type antenna into a longitudinal side of the housing surface of the mobile phone, wherein the antenna is connected to the mobile phone via a hinge means so that the free end can be swivelled away from the mobile phone. The antenna is swivelled out manually or automatically when opening the clamshell-type mobile phone. However, in the swivelled out position the antenna can break easily and the mobile phone is considered as inconvenient as compared to mobile phones with built-in antennae.

From US2002/0054677 A1 a clam-shell type mobile phone with a satellite antenna embedded in a flap, which is pivotally mounted to the upper end of the mobile phone is known. When connecting to a satellite, the flap is swivelled out, such that the antenna is oriented towards the sky, i.e. is oriented towards the satellite to which the connection is established. The provision of a flap into which the antenna is embedded protects the antenna, but makes an unaesthetic sight when swivelled out and requires additional manual action from the user to operate the mobile phone.

The object of the present invention is therefore to provide a clamshell-type mobile phone with an antenna embedded in a swivelling flap that is unobtrusive and comfortable to handle.

This object is achieved by a mobile phone according to the enclosed independent claim 1. Advantageous features of the present invention are defined in the corresponding subclaims.

According to the present invention a mobile phone with a first part with an inner side and a second part with an inner side, the first part and the second part connected to each other and foldable to each others inner sides by a hinge means, comprises a swivelling antenna embedded in a flap which is adapted to move between a closed position where the flap is in contact with the side opposite to the inner side of the first part or the side opposite to the inner side of the second part and an open position where the free end of the flap is swivelled away from the first part or the second part. Said flap is located at the end of the first part or the second part where the hinge means connects the first part with the second part.

The flap design with the incorporated antenna is suited to fulfil further functions in addition to the antenna function. If the use of the flap is a natural or ergonomical one for the user the antenna function of the flap as such steps back and user will accept and use the flap more easily.

In the closed position the flap can cover a display and/or a camera positioned under the flap and/or can contain a window which in the closed position permits a view on the display and/or the camera. Further, the flap can contain a display and/or the flap can be formed for appending the mobile phone at a belt or for putting the mobile phone in a holding device in an automobile.

Advantageously, the antenna is a flat patch antenna connectable to the mobile phone, so that the antenna (flap) can be replaced or exchanged with a antenna having an other design or functions.

For reduction of the parts of the mobile phone the flap is connected to the mobile phone via the hinge means which connects the first part and the second part.

The flap may be opened and closed by the user manually. In an advantageous embodiment a locking means locks the flap if the mobile phone is in its closed state and flips open the flap automatically, if the mobile phone is opened. Thus, when the mobile phone is opened for communication, the antenna is automatically moved into the external position in order to increase the antenna gain. Alternatively, the opening of the flap may be automatically activated when the user presses the key for a call set-up on the keypad, wherein the locking means is mechanically or electronically connected to said key.

In the following description, the present invention is explained in more detail with respect to a special embodiment and in relation to the enclosed drawings, in which
Figs. 1a and 1b show a perspective view and a side view, respectively, of an embodiment of the mobile phone according to the present invention, wherein the mobile phone shown in Fig. 1a is in the open state and the mobile phone shown in Fig. 1b the closed state,
Figs. 2a and 2b show a front view and a side view, respectively, of an example of a mobile phone, wherein the mobile phone shown in Fig. 2a is in the open state and the mobile phone shown in Fig. 2b the closed state,
Figs. 3a and 3b show side views of an example of a mobile phone, wherein in Fig. 3a the flap is in the open state and in Fig. 3b in the closed state and
Figs. 4a and 4b show a front view and a side view, respectively, of an example of a mobile phone, wherein the mobile phone shown in Fig. 4a is in the open state and the mobile phone shown in Fig. 4b the closed state.

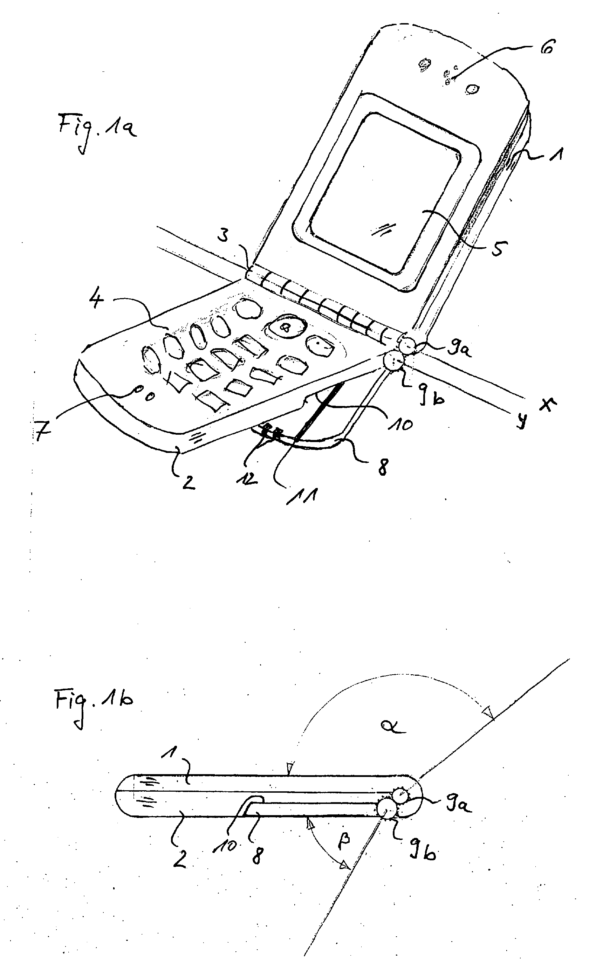

Fig. 1a shows a perspective view of a clamshell-type mobile phone according to the present invention being in its open state. The clamshell-type mobile phone comprises a first part 1 and a second part 2 with approximately the same length. The first part 1 and the second part 2 of the mobile phone are connected to each other with a hinge 3 so that the first part 1 swivels around the axis x. The first part 1 comprises a display 5 on its inner side and the second part 2 comprises a keyboard 4 on its inner side. Further, a loudspeaker 6 and a microphone 7 are built-in in the first part 1 and the second part 2, respectively. A flap 8 is attached with a hinge (not show) at the underside of the second part 2 so that the flap 8 swivels around the axis y, e.g. in the open position away from the second part 2. Further, it is also possible to connect the flap 8 at the hinge 3. Hereby, an additional hinge only for the flap 8 is not necessary.

Generally, in all embodiments described herein, an antenna (not shown) is built-in in the flap 8. Basically the antenna build is a metallic part giving the shape and the antenna function, enclosed in a plastic part or over molded, e.g. by the elastic flap 8. In particular, the antenna can be a patch antenna implemented in a microstrip technology. The term 'microstrip' is hereby to be seen in the broadest sense covering a thin conductive strip or layer separated from one or more large-surface counter electrodes by a non-conductive volume. The common concept of a microstrip antenna e.g. provides for a radiating component implemented in form of a thin conductive electrode arranged above a counter electrode which is set to ground potential. As the lateral dimensions of the radiating electrode are far bigger than its thickness, a respective type of electrode is usually referred to as a patch. The patch is separated from the counter or ground electrode by a spacer formed of non-conductive material such serving as a dielectric. A conductive strip extending from the patch forms the feeding line of the antenna which may be connected to a transceiver circuitry. The patch may show a planar surface, a curved surface or any other united shape. The lateral dimensions of the patch correspond to a certain part of the possible radio-frequency (RF) wavelengths to be received or transmitted such, that a standing wave condition for the antenna current distribution on the patch is fulfilled. The shape of the patch may hereto resemble a rectangle or also a more complex geometry.

The electrical and mechanical connection of the antenna and the flap 8, respectively, to the second part 2 is made by means of a clip system (not show) which permits the user to easily replace/exchange the flap 8.

The clamshell-type mobile phone shown in Fig. 1a further comprises a gear 9a, 9b, wherein the small gearwheel 9a of the gear 9a, 9b is positioned on the axis x and connected to the first part 1 and the larger gearwheel 9a is positioned on the axis y and connected to the flap 8. Thus, if the clamshell-type mobile phone is closed, the gearwheel 9b is driven by the gearwheel 9a and the flap 8 is lowered in the cut-out 10 at the underside of the second part 2 as shown in Fig. 1b. On the other hand if the clamshell-type mobile phone is opened, the flap 8 swivels away from the second part 2 automatically, wherein aperture angle β of the flap is smaller than the aperture angle α of the first part 1. Because the aperture angle α is usually smaller than 360°, the gear teeth do not have to be provided over the entire circumference of the gearwheels 9a, 9b.

As shown in Fig. 1a, the flap 8 comprises guide rails 11 for holding the open clamshell-type mobile phone in a holder assembled in an automobile or car. Such holders for mobile terminals or car cradles are generally known in the state of the art. The holders are normally fixedly connected to the loudspeaker and radio system of the car interior as well as to an external antenna and to a microphone for picking up acoustic speech information from the driver or one of the passengers. A driver can have a telephone communication without holding the mobile phone to his ear. Usually, the holder or car cradle comprises a snap-in mechanism or clamping mechanism or the like, so that a mobile phone is securely fixed but can be released in an easy and simple manner by pushing a button or the like. However, such holders known in the prior art are only able to accommodate normal mobile phones and not clamshell-type mobile phones. With the present invention the corresponding holder (not show) of the clamshell-type mobile phone shown in Fig. 1a must merely have a slot with grooves according to the guide rails 11 of the flap 8. When the flap 8 is inserted in the slot vertically, the electrical connection between the clamshell-type mobile phone and the holder is made via electrical contacts 12 integrated into the flap 8 and the holder.

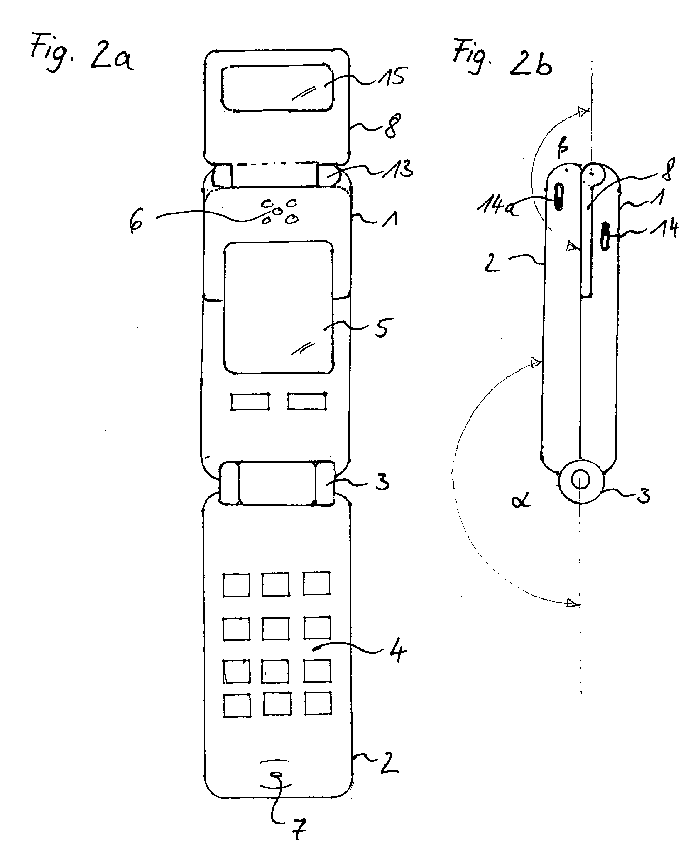

Fig. 2a shows a front view of an example of a clamshell-type mobile phone. The flap 8 comprising the antenna is connected to the top of the first part 1 via a hinge 13, wherein in the closed state the flap 8 is swivelled onto the inner side of the first part 1 as shown in Fig. 2b. Hereby, the flap 8 is stored in a cut-out so that the inner side of the first part 1 shows a flush surface.

The hinges 3 and 13 contain springs (not shown) which are biased when folding the first and second part 1, 2 onto each other and closing the flap 8, respectively. In the closed state the flap 8 and the first and second part 1, 2 are locked to each other with a snap-in mechanism (not shown), wherein by pressing the key 14b the mechanism is unlocked so that caused by the biased springs, the first and second part 1, 2 and the flap 8 flip open, whereas by pressing the key 14a only the first and second part 1, 2 are unlocked and have to be flipped open manually.

The flap 8 partly covers the display 5 in its closed state. Therefore, a window 15 is arranged in the flap 8 so that information shown on the display 5 can be seen without opening the flap 8.

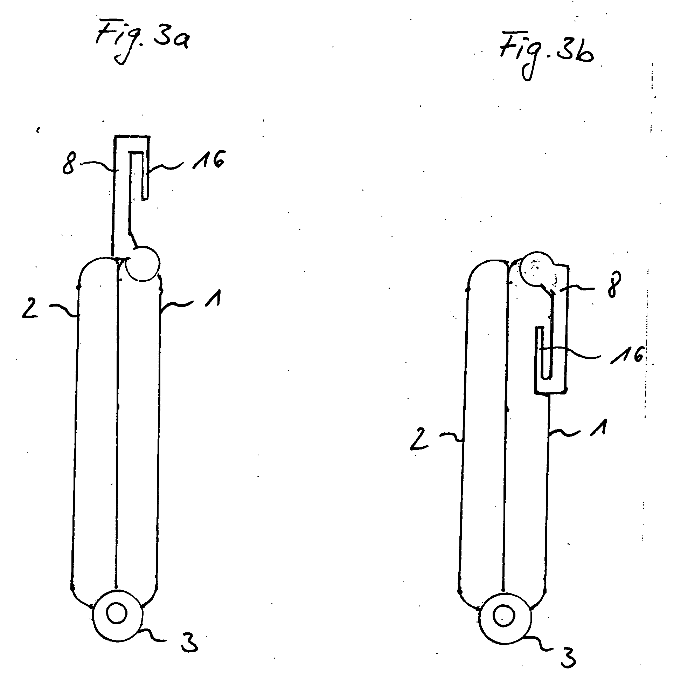

Figs. 3a and 3b show side views of an example of a mobile phone, wherein in Fig. 3a the flap 8 is in the open state and in Fig. 3b in the closed state. The flap 8 comprises a hook 16 for appending the clamshell-type mobile phone to a belt or the like. In the closed state the flap 8 is locked with a snap-in mechanism, wherein the flap 8 protects in its closed state a camera lens positioned under the flap 8 (not shown). The locking mechanism of the flap 8 is electrically connected to the key for a call set-up and is mechanically connected to a key which activates the camera (not show) so that the flap 8 flips open automatically when the user wants to use the camera or to make a telephone call.

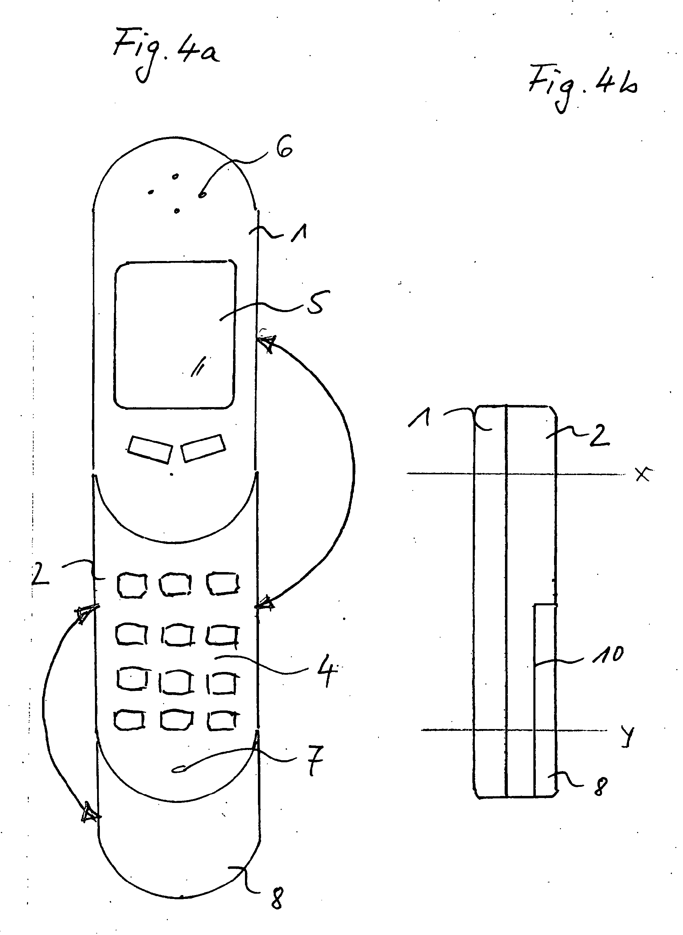

Figs. 4a and 4b show a front view and a side view, respectively, of an example of a mobile phone, wherein the mobile phone shown in Fig. 4a is in the open state and the mobile phone shown in Fig. 4b the closed state. The first part 1 and the second part 2 of the mobile phone are connected to each other with a hinge (not show) having an axis x so that the first part 1 and the second part 2 can be twisted against each other as shown in Fig. 4a. The flap 8 is connected to the second part 2 with a hinge (not show) having an axis y in same direction of the axis x so that the flap 8 can swivel from the housing at the underside of the second part 2 in the open position as shown in Fig. 4a.

It has to be noted, that the first part 1 and the second part 2 of the mobile phone 1 are advantageously made of plastics, but can be made of any material including metallic particles due to the external antenna. There is no limitation for using exchangeable covers and patch antenna.

## Claims

1. A mobile phone with a first part (1) with an inner side and a second part (2) with an inner side, the first part (1) and the second part (2) connected to each other and foldable onto each others inner sides by a hinge means (3), comprising a swivelling antenna embedded in a flap (8) which is adapted to move between a closed position where the flap is in contact with the side opposite to the inner side of the first part (1) or the side opposite to the inner side of the second part (2) and an open position where the free end of the flap (8) is swivelled away from the first part (1) or the second part (2)
**characterised in**
**that** said flap (8) is located at the end of the first part(1) or the second part (2) where the hinge means (3) connects the first part (1) with the second part (2).

2. A mobile phone according to claim 1,
**characterised in,**
**that** said flap (8) is connectable to the mobile phone via a clip system.

3. A mobile phone according to claim 1 or 2,
**characterised in, that** said flap (8) covers a display (5) and/or a camera positioned under the flap (8).

4. A mobile phone according to claim 1 or 2, **characterised in, that**
said flap comprises a window (15) which in the closed position permits a view on a display (5) and/or a camera positioned under the flap (8).

5. A mobile phone according to anyone of claims 1 to 4, **characterised in,**
**that** a locking means (9a, 9b; 14a, 14b) locks the flap (8) if the mobile phone is in its closed state and flips open the flap (8) if the mobile phone is opened.

6. A mobile phone according to anyone of claims 1 to 5, **characterised in, that**
said flap (8) comprises a holding device (11, 12; 16) for holding the mobile phone.

7. A mobile phone according to anyone of claims 1 to 6, **characterised in,**
**that** said flap (8) consists of an elastic synthetic material.

8. A mobile phone according to anyone of claims 1 or 7,
**characterised in,**
**that** said flap (8) is connected to the mobile phone via said hinge means (3).

9. A mobile phone according to one of the claims 1 to 8,
**characterised in,**
**that** said flap (8) comprises a display.

10. A mobile phone according to anyone of claims 1 to 9 **characterised in,**
**that** said antenna is a patch antenna.

## Patentansprüche

1. Mobiltelefon mit einem ersten Teil (1) mit einer Innenseite und einem zweiten Teil (2) mit einer Innenseite, wobei das erste Teil (1) und das zweite Teil (2) miteinander verbunden sind und mittels einer Schaniiercinnchtung (3) auf ihre Innenseiten zusammenklappbar sind, einschließlich einer Schwenkantenne, die in einer Klappe (8) eingebettet ist, die so ausgebildet ist, dass sie sich zwischen einer Schließstellung, bei der die Klappe die der Innenseite des ersten Teils (1) gegenüberliegende Seite oder die der Innenseite des zweiten Teils (2) gegenüberliegende Seite berührt, und einer Öffnungsstellung, bei der das freie Ende der Klappe (8) vom ersten Teil (1) oder zweiten Teil (2) weggeschwenkt ist, hin und her bewegen lässt,
**dadurch gekennzeichnet,**
**dass** diese Klappe (8) an demjenigen Ende des ersten Teils (1) oder des zweiten Teils (2) angeordnet ist, wo die Scharniereinrichtung (3) das erste Teil (1) mit dem zweiten Teil (2) verbindet.

2. Mobiltelefon nach Anspruch 1, **dadurch gekennzeichnet, dass** die Klappe (8) mittels eines Klemmsystems mit dem Mobiltelefon verbunden werden kann.

3. Mobiltelefon nach Anspruch 1 oder 2, **dadurch gekennzeichnet, dass** die Klappe (8) eine unter der Klappe (8) angeordnete Anzeige (5) und/oder Kamera abdeckt.

4. Mobiltelefon nach Anspruch 1 oder 2, **dadurch gekennzeichnet, dass** die Klappe ein Fenster (15) umfasst, das bei Schließstellung einen Blick auf eine unter der Klappe (8) angeordnete Anzeige (5) und/oder Kamera ermöglicht.

5. Mobiltelefon nach einem der Ansprüche 1 bis 4, **dadurch gekennzeichnet, dass** eine Arretiereinrichtung (9a, 9b; 14a, 14b) die Klappe (8) arretiert, wenn sich das Mobiltelefon in Schließstellung befindet, und die Klappe (8) aufklappt, wenn das Mobiltelefon geöffnet wird.

6. Mobiltelefon nach einem der Ansprüche 1 bis 5, **dadurch gekennzeichnet, dass** die Klappe (8) eine Haltevorrichtung (11, 12; 16) zum Halten des Mobiltelefons umfasst.

7. Mobiltelefon nach einem der Ansprüche 1 bis 6, **dadurch gekennzeichnet, dass** die Klappe (8) aus einem elastischen Kunststoff gebildet ist.

8. Mobiltelefon nach einem der Ansprüche 1 oder 7, **dadurch gekennzeichnet, dass** die Klappe (8) mittels der Scharniereinrirchtung (3) mit dem Mobiltelefon verbunden ist.

9. Mobiltelefon nach einem der Ansprüche 1 bis 8, **dadurch gekennzeichnet, dass** die Klappe (8) eine Anzeige umfasst.

10. Mobiltelefon nach einem der Ansprüche 1 bis 9, **dadurch gekennzeichnet, dass** es sich bei der Antenne um eine Patch-Antenne handelt.

## Revendications

1. Téléphone mobile comportant une première partie (1) présentant un côté intérieur et une seconde partie (2) présentant un côté intérieur, la première partie (1) et la seconde partie (2) étant reliées l'une à l'autre et pliables sur leurs côtés intérieurs par un moyen de charnière (3), comprenant une antenne pivotante incorporée dans un volet (8) qui est conçu pour se déplacer entre une position fermée où le volet est en contact avec le côté opposé au côté inférieur de la première partie (1) ou le côté opposé au côté intérieur de la seconde partie (2) et une position ouverte dans laquelle l'extrémité libre du volet (8) est pivotée à l'écart de la première partie (1) ou de la seconde partie (2),
**caractérisé en ce que**
ledit volet (8) est situé à l'extrémité de la première partie(1) ou de la seconde partie (2) où le moyen de charnière (3) relie la première partie (1) à la seconde partie (2).

2. Téléphone mobile selon la revendication 1,
**caractérisé en ce que**
ledit volet (8) peut être relié au téléphone mobile par l'intermédiaire d'un système de pince.

3. Téléphone mobile selon la revendication 1 ou 2,
**caractérisé en ce que** ledit volet (8) recouvre un affichage (5) et/ou un appareil de prise de vues positionné sous le volet (8).

4. Téléphone mobile selon la revendication 1 ou 2,
**caractérisé en ce que**
ledit volet comporte une fenêtre (15) qui, dans la position fermée permet d'observer l'affichage (5) et/ou l'appareil de prise de vues positionné sous le volet (8).

5. Téléphone mobile selon l'une quelconque des revendications 1 à 4, **caractérisé en ce que**
un moyen de blocage (9a, 9b ; 14a, 14b) bloque le volet (8) si le téléphone mobile se trouve dans son état fermé et ouvre d'un petit coup sec le volet (8) si le téléphone mobile est ouvert.

6. Téléphone mobile selon l'une quelconque des revendications 1 à 5, **caractérisé en ce que** ledit volet (8) comprend un dispositif d'accrochage (11, 12 ; 16) destiné à accrocher le téléphone mobile.

7. Téléphone mobile selon l'une quelconque des revendications 1 à 6, **caractérisé en ce que** ledit volet (8) est constitué d'une matière synthétique élastique.

8. Téléphone mobile selon l'une quelconque des revendications 1 à 7, **caractérisé en ce que**
ledit volet (8) est relié au téléphone mobile par l'intermédiaire d'un moyen de charnière (3).

9. Téléphone mobile selon l'une quelconque des revendications 1 à 8, **caractérisé en ce que**
ledit volet (8) comprend un affichage.

10. Téléphone mobile selon l'une quelconque des revendications 1 à 9, **caractérisé en ce que** ladite antenne est une antenne pastille.
